**Europäisches Patentamt**

**European Patent Office**

**Office européen des brevets**

(19)

(11) Veröffentlichungsnummer : **0 424 557 B1**

(12)

# EUROPÄISCHE PATENTSCHRIFT

(45) Veröffentlichungstag der Patentschrift :
**22.07.92 Patentblatt 92/30**

(51) Int. Cl.⁵ : **B60H 1/24, F24F 13/065**

(21) Anmeldenummer : **89119752.7**

(22) Anmeldetag : **24.10.89**

(54) **Ausströmdüse für Belüftungs- oder Klimaanlagen.**

(43) Veröffentlichungstag der Anmeldung :
**02.05.91 Patentblatt 91/18**

(45) Bekanntmachung des Hinweises auf die
Patenterteilung :
**22.07.92 Patentblatt 92/30**

(84) Benannte Vertragsstaaten :
**DE ES FR**

(56) Entgegenhaltungen :
**GB-A- 2 081 883**
**US-A- 3 221 633**

(73) Patentinhaber : **SIEMENS
AKTIENGESELLSCHAFT
Wittelsbacherplatz 2
W-8000 München 2 (DE)**

(72) Erfinder : **Soethout, Freddie
Am blauen Stein 6
W-5024 Pulheim 2 (DE)**
Erfinder : **Prause, Martin, Dipl.-Ing. (FH)
Teichbergweg 1
W-8630 Coburg (DE)**

EP 0 424 557 B1

**Beschreibung**

Die Erfindung bezieht sich auf eine Ausströmdüse für Belüftungs- oder Klimaanlagen gemäß Oberbegriff des Anspruchs 1; eine derartige Ausströmdüse ist in Anwendung bei einem Kraftfahrzeug durch eine offenkundige Vorbenutzung bekannt.

Im bekannten Fall sind in einem um eine waagrechte Achse schwenkbaren Drehkipplamellen-Gehäuse die senkrecht angeordneten Richtlamellen an ihren Vorderkanten in festen Vertikalstreben an der Vorderseite des Drehkipplamellen-Gehäuses schwenkbar gelagert. Die Rückkanten der Richtlamellen sind über eine Kuppelstange derart miteinander verbunden, daß bei Verschwenkung zumindest einer Richtlamelle die übrigen Richtlamellen zueinander parallel derart seitenverschwenkbar sind, daß die geförderte Luft als gerichtete Kompaktstrahlströmung je nach Stellung der Richtlamellen mittig gerade oder mehr oder weniger stark seitlich abgelenkt aus der Ausströmdüse austritt.

Ausgehend von einer derartigen Ausströmdüse kann mit geringem Zusatzaufwand und mit weitgehender Beibehaltung vorhandener Bauteile und ohne Inanspruchnahme zusätzlichen Einbauraums der Lüftungskomfort durch eine zur richtbaren Kompaktstrahlströmung zusätzlich einstellbare Strahlcharakteristik mit divergierender Diffusaussströmung erfindungsgemäß durch zwischen die Richtlamellen einschiebbare Diffus-Teillamellen erreicht werden, wobei in konstruktiv sowie fertigungs- und bedienungstechnisch besonders einfacher Weise die Diffus-Teillamellen Bestandteile eines von der Rückseite der Richtlamellen zwischen diese zumindest teilweise einschiebbaren Diffus-Gitters sind; dadurch kann unter Beibehaltung des grundsätzlichen Aufbaus einer Ausströmdüse mit darin schwenkbar gehaltenen Richtlamellen, insbesondere einem Drehkipplamellen-Gehäuse mit um eine vertikale Schwenkachse schwenkbaren Richtlamellen, eine Diffus-Luftströmung durch ein einfaches Zusatzbauteil erreicht werden, das bei normaler Richtstrahl-Luftströmung in dem an sich vorhandenen Einbauraum hinter den einströmseitigen Rückkanten der Schwenklamellen angeordnet und bei Diffus-Luftströmung in den ebenfalls an sich vorhandenen Zwischenraum zwischen die schwenkbaren Vertikallamellen eingeschoben wird.

Als Bedienelement für die Einstellung der diffusen Strahlcharakteristik ist nach einer Erfindung ein seitlich an einem die schwenkbaren Richtlamellen aufnehmenden Drehkipplamellen-Gehäuse drehbar angeordneter Drehbedienknopf vorgesehen, über den das Diffusgitter schlittenartig von seiner ersten Aus-Stellung hinter den Richtlamellen bei Richtstrahlbetrieb der Ausströmdüse in seine Ein-Stellung mit zwischen die Richtlamellen eintretenden Diffus-Teillamellen bei Diffusbetrieb der Ausströmdüse verschiebbar ist; zum kompakten und gleichzeitig einfachen Antrieb zwischen dem Drehbedienknopf und dem schlittenartig linear bewegbaren Diffusgitter ist eine spiralförmige Führungsbahn im Drehbedienknopf vorgesehen, in den ein gleichzeitig linear zur Schlittenführung bewegter Mitnahmezapfen des Diffusgitters eingreift.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

FIG 1 in einer perspektivischen Explosionsdarstellung ein Drehkipplamellen-Gehäuse mit jeweils um eine Vertikalachse schwenkbaren Richtlamellen und über einen Drehbedienknopf zwischen diese linear einschiebbarem Diffusgitter,

FIG 2,3 die Anordnung gemäß FIG 1 in einem Schnittverlauf zwischen dem Drehbedienknopf-Antrieb des Diffusgitters und der benachbarten Richtlamelle bei zurückgeschobenem (FIG 2) bzw. vorgeschobenem Diffusgitter (FIG 3).

FIG 4,5 die Anordnung gemäß FIG 1 in einem Schnittverlauf zwischen zwei Richtlamellen bei zurückgeschobenem (FIG 4) bzw. vorgeschobenem Diffus-Gitter (FIG 5).

In einem z.B. zu einem Luftauslaß im Armaturenbrett eines Kraftfahrzeuges führenden Außengehäuse 6 mit einer einströmseitigen Absperrklappe 5 ist über seitliche Lagerzapfen 16 ein Drehkipplamellen-Gehäuse 1 horizontal schwenkbar gelagert. An der Vorderseite des Drehkipplamellen-Gehäuses 1 verlaufen gehäusefeste Vertikalstreben 11, die gleichzeitig als vertikale Schwenkachsen für Richtlamellen 2;22 ausgebildet sind, die mit ihrer ausströmseitigen Vorderkante in den Vertikalstreben 11 schwenkbar gelagert und im Bereich ihrer einströmseitigen Rückkanten über Kuppelstangen 21,23 im Sinne einer richtbaren Kompaktstrahlströmung in gegenseitiger Schwenkmitnahme stehen.

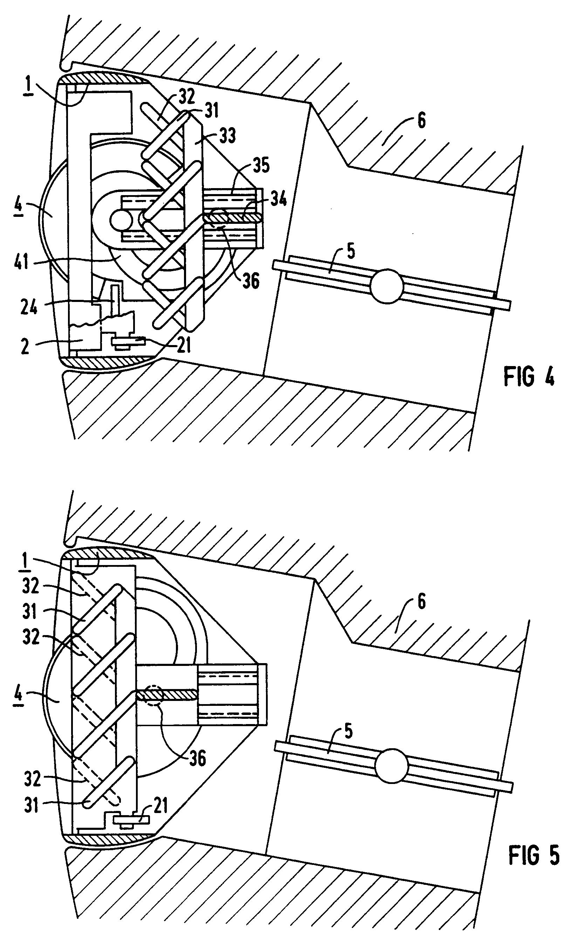

Zur Erzielung einer erfindungsgemäßen zusätzlichen Strahlcharakteristik mit divergierender Diffusausströmung ist in dem an sich vorhandenen Einbauraum zwischen den einströmseitigen Rückkanten der Richtlamellen 2;22 und der Absperrklappe 5 andererseits ein Diffusgitter 3 vorgesehen, das über einen Drehbedienknopf 4 von seiner in FIG 4 dargestellten Aus-Stellung bei Kompaktstrahl-Betrieb in seine in FIG 5 dargestellte Ein-Stellung bei Diffusströmungs-Betrieb verschoben werden kann.

Das Diffusgitter 3 besteht im wesentlichen aus Lamellenreihen mit wechselseitig mit nach schräg unten gerichteten Teillamellen 31 bzw. nach schräg oben gerichteten Teillamellen 32, die derart angeordnet und durch vertikale Verbindungsstreben 23 bzw. horizontale Verbindungsstreben 34 im Diffusgitter 3 gehalten sind, daß

2

sie bei Diffusströmungs-Betrieb in die Zwischenräume zwischen die gerade ausgerichteten Richtlamellen 2;22 mit ihren vorderen freien Enden, vorzugsweise bis zur Vorderkante der Ausströmdüse, vorschiebbar sind. Im vorgeschobenen Zustand des Diffusgitters 3 strömt die Luft entsprechend der Richtung der Diffus-Teillamellen 31,32 schichtweise nach oben und unten gerichtet aus der Ausströmdüse aus; zwischen den Schichten berühren sich die einzelnen Luftströme, wodurch teilweise eine nach vorn resultierende Richtung entsteht, so daß insgesamt ein gut aufgefülltes, weit auffächerndes diffuses Strömungsbild gewährleistet ist. Im zurückgeschobenen Zustand des Diffusgitters 3 werden die Diffus-Teillamellen 31;32 aufgrund der breiten Zwischenräume, die zuvor von den Vertikalstreben 11 ausgefüllt wurden, ohne luftlenkende Wirkung umströmt, so daß die dann eingestellte gerichtete Kompaktstrahlströmung aus den Zwischenräumen zwischen den Richtlamellen 2;22 gewährleistet ist.

Das Diffusgitter 3 wird über einen an der linken Seitenwandung des Drehkipplamellen-Gehäuses 1 drehbar gelagerten Drehbedienknopf 4 verschoben. Dazu weist der Drehbedienknopf 4 eine spiralförmige Führungsbahn 41 auf, in die ein Mitnahmezapfen 36 des Diffusgitters 3 eingreift, der zusätzlich in einer Linearführung 14 des Drehkipplamellen-Gehäuses 1 geführt ist. Zur Linearführung des Diffusgitters 3 dient ein an dieses einstückig angegossener Führungsschlitten 35 mit Führungsschienen 37, denen korrespondierende Führungsschienen 13 an einer Führungsschlittenaufnahme 12 des Drehkipplamellen-Gehäuses 1 zugeordnet sind.

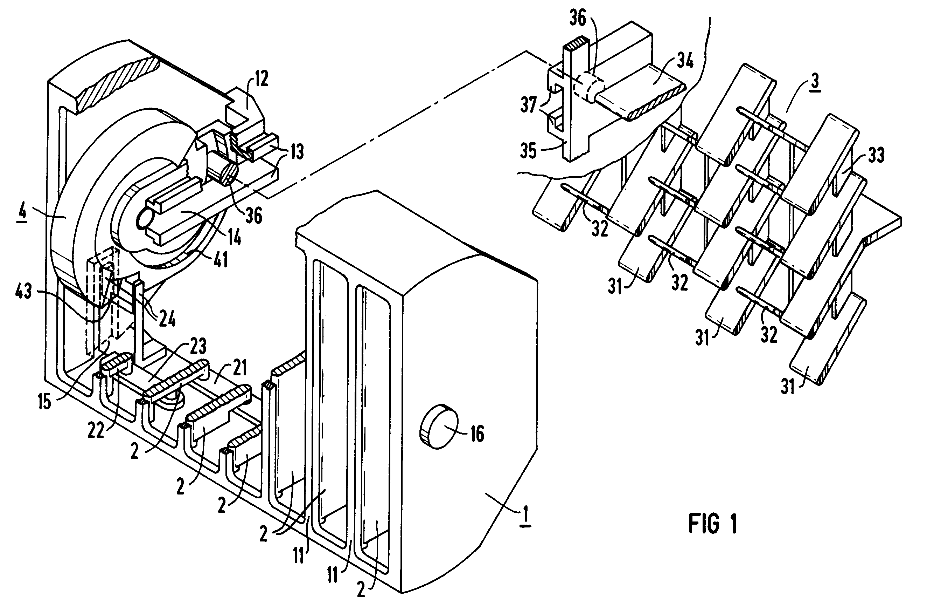

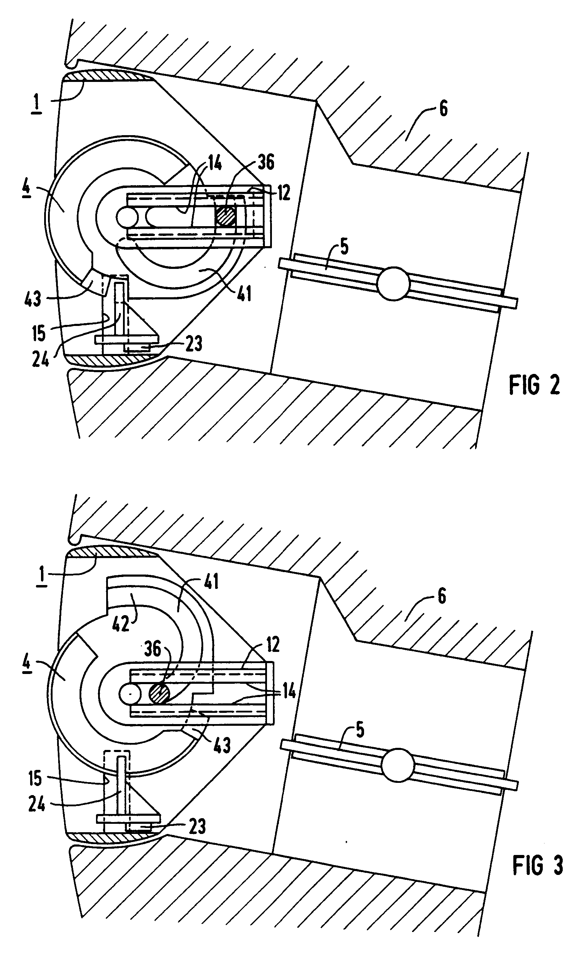

Um auch bei extremer Schrägstellung der Richtlamellen 2;22 auf einfache und sichere Weise das Diffusgitter 3 über den Drehbedienknopf 4 in Betriebsstellung für eine Diffus-Luftströmung nach vorne mit in die Zwischenräume zwischen den Richtlamellen 2;22 eingreifenden Diffus-Teillamellen 31;32 bewegen zu können, ist nach einer Ausgestaltung der Erfindung eine Zentriervorrichtung zwischen dem Drehbedienknopf 4 und den schwenkbaren Richtlamellen 2;22 im Sinne einer der Bewegung des Diffusgitters 3 vorgeordneten Geradstellung der Richtlamellen 2;22 vorgesehen; als Zentriervorrichtung ist gemäß der insbes. aus FIG 1-3 ersichtlichen Ausgestaltung an dem Drehbedienknopf 4 ein Zentrierkonus 43 angeformt, dem eine Zentriergabel 24 zugeordnet ist, die über Kuppelstangen 23,21 mit den Richtlamellen 2;22 in Mitnahmeverbindung steht. Bei Betätigung des Drehbedienknopfes 4 und gleichzeitiger Schrägstellung der Richtlamellen 2;22 fährt der Zentrierkonus 43 zunächst gegen einen Gabelarm der dann links oder rechts verschobenen Zentriergabel 24 und bringt derart über die Kuppelstangen 23,21 die Richtlamellen 2;22 in Geradstellung.

Zur Gewährleistung einer kompakten Bauform ist in der linken Seite des Drehkipplamellen-Gehäuses 1 ein Ausschnitt 15 für die seitlich verschiebbare Zentriergabel 24 und im Bereich der Zentriergabel 24 eine verkürzte Richtlamelle 22 vorgesehen, die über eine Kuppelstange 23 mit der benachbarten unverkürzten Richtlamelle 2 und über diese mit der sämtliche übrigen Richtlamellen verbindenen Kuppelstange 21 in Mitnahmeverbindung steht.

Um zu gewährleisten, daß während des Zentriervorganges das Diffusgitter 3 noch nicht bewegt wird, ist in vorteilhafter Weise eine Bewegungstotzeit für das Diffusgitter 3 daduch vorgesehen, daß der spiralförmigen Führungsbahn 41 ein kreisbogenförmiger Führungsbahnteil 42 derart vorgelagert ist, daß sich der Radius in diesem Führungsbahnteil 42 noch nicht verändert und somit der Mitnahmezapfen 36 noch nicht horizontal in seiner Linearführung 14 transportiert wird. Erst wenn die ganze Breite des Drehbedienknopfes 4 in die Zentriergabel 24 eingeführt ist, wird durch die dann beginnende spiralförmige Führungsbahn 41 das Diffusgitter 1 über den Mitnahmezapfen 36 in seiner Schlittenführung nach vorne bewegt.

## Patentansprüche

1. Ausströmdüse für Belüftungs- oder Klimaanlagen, insbesondere in Kraftfahrzeugen, mit mehreren, jeweils um eine parallel zur ausströmseitigen Vorderkante verlaufende Schwenkachse (Vertikalstreben 11) schwenkbaren und im Bereich ihrer einströmseitigen Rückkante durch ein Kuppelteil (Kuppelstangen 21;23) im Sinne einer lenkbaren Richtstrahl-Luftströmung in gegenseitiger Schwenkmitnahme stehenden Richtlamellen (2;22), **gekennzeichnet** durch zwischen die Richtlamellen (2;22) einschiebbare Diffus-Teillamellen (31;32) im Sinne einer von der Richtstrahl-Luftströmung abweichenden Diffus-Luftströmung.

2. Ausströmdüse nach Anspruch 1, **dadurch gekennzeichnet**, daß die Diffus-Teillamellen (31;32) Teile eines von der Rückseite der Richtlamellen (2;22) zwischen diese zumindest teilweise einschiebbaren starren Diffusgitters (3) sind.

3. Ausströmdüse mit um eine vertikale Schwenkachse, insbesondere in einem Drehkipplamellen-Gehäuse (1), schwenkbaren Richtlamellen (2;22) nach Anspruch 2, **dadurch gekennzeichnet**, daß das Diffusgitter (3) zwischen die vertikalen Richtlamellen (2; 22) einschiebbare Lamellenreihen mit jeweils wechselweise nach oben bzw. unten gerichteten Diffus-Teillamellen (31;32) aufweist.

4. Ausströmdüse nach Anspruch 3, **dadurch gekennzeichnet**, daß das Diffusgitter (3) durch ein seitliches Bedienelement (Drehbedienknopf 4) schlittenartig (Führungsschlitten 35) von einer ersten Aus-Stellung hinter den Richtlamellen (2; 22) bei Richtstrahl-Betrieb der Ausströmdüse in eine Ein-Stellung mit zwischen die Richtlamellen (2;22) eintretenden Diffus-Teillamellen (31;32) bei Diffus-Betrieb der Ausströmdüse verschiebbar ist.

5. Ausströmdüse nach Anspruch 4, **gekennzeichnet** durch zumindest einen am Drehkipplamellen-Gehäuse (1) drehbar gelagerten Drehbedienknopf (4) mit einer spiralförmigen Führungsbahn (41) für einen Mitnahmezapfen (36) des in einer Schlittenführung (12) des Drehkipplamellen-Gehäuses (1) zwischen die Richtlamellen (2; 22) linear verschiebbaren Diffusgitters (3).

6. Ausströmdüse nach Anspruch 5, **gekennzeichnet** durch eine Zentriervorrichtung zwischen dem Drehbedienknopf (4) und den schwenkbaren Richtlamellen (2;22) im Sinne einer der linearen Bewegung des Diffusgitters (3) aus seiner Aus-Stellung in seine Ein-Stellung vorgeordneten Geradstellung der Richtlamellen (2;22).

7. Ausströmdüse nach Anspruch 6, **gekennzeichnet** durch einen Zentrierkonus (43) an dem Drehbedienknopf (4) und einer diesem im Sinne einer Geradstellung der Richtlamellen (2;22) zugeordneten korrespondierenden, mit dem Kuppelteil (Kuppelstangen 21;23) der Richtlamellen (2;22) in Mitnahmeverbindung stehenden Zentriergabel (24).

8. Ausströmdüse nach Anspruch 6, **gekennzeichnet** durch einen bis zur Geradstellung der Richtlamellen (2;22) der spiralförmigen Führungsbahn (41) des Drehbedienknopfes (4) vorgelagerten kreisbogenförmigen Führungsbahnteil (42).


## Claims

1. Discharge nozzle for ventilating systems or air-conditioning systems, in particular in motor vehicles, having several directional blades (2;22) which can be swivelled, in each case, about a swivel axis (vertical struts 11), extending parallel to the front edge on the discharge side, and are coupled together in the region of their rear edge on the inflow side by means of a coupling portion (coupling rods 21;23) so that there is mutual entrainment when swivelling for the purposes of a guidable directed jet air flow, **characterised by** diffusing partial blades (31;32) which can be inserted between the directional blades (2;22) for the purposes of a diffused air flow which deviates from the directed jet air flow.

2. Discharge nozzle according to claim 1, **characterised in that** the diffusing partial blades (31;32) are parts of a rigid diffusing grid (3) which at least in part can be inserted from the rear side of the directional blades (2;22) between the latter.

3. Discharge nozzle having directional blades (2;22) according to claim 2, which can be swung about a vertical swivel axis, in particular in a turn-tilt blade housing (1), **characterised in that** the diffusing grid (3) has series of blades which can be inserted between the vertical directional blades (2;22) and which have diffusing partial blades (31;32) which, in each case, are alternately directed upwards or downwards.

4. Discharge nozzle according to claim 3, **characterised in that** the diffusing grid (3) can be displaced by means of a lateral operating element (rotary operating knob 4) in the manner of a slide (guide slide 35) from a first off-position behind the directional blades (2;22) in the case of directed jet operation of the discharge nozzle into an on-position with diffusing partial blades (31;32) entering between the directional blades (2;22) in the case of diffused operation of the discharge nozzle.

5. Discharge nozzle according to claim 4, **characterised by** at least one rotary operating knob (4) which is rotatably mounted on the turn-tilt blade housing (1) and has a spiral-shaped guideway (41) for a slaving journal (36) of the diffusing grid (3) which can be linearly displaced in a slide guide (12) of the turn-tilt blade housing (1) between the directional blades (2;22).

6. Discharge nozzle according to claim 5, **characterised by** a centering arrangement between the rotary operating knob (4) and the swivelling directional blades (2;22) for the purposes of setting straight the directional blades (2;22) as prearranged for the linear movement of the diffusing grid (3) out of its off-position into its on-position.

7. Discharge nozzle according to claim 6, **characterised by** a centering cone (43) on the rotary operating knob (4) and a corresponding centering fork (24) which is associated with the latter for the purposes of setting straight the directional blades (2;22) and which is connected with the coupling portion (coupling rods 21;23) of the directional blades (2;22) so that the latter are entrained therewith.

8. Discharge nozzle according to claim 6, **characterised by** a circular arc-shaped guideway portion (42) which is extended in front of the spiral-shaped guideway (41) of the rotary operating knob (4) until the directional blades (2;22) are set straight.

**Revendications**

1. Buse d'éjection pour des installations de ventilation ou de climatisation, notamment dans des véhicules automobiles, comportant plusieurs lamelles directrices (2;22), qui peuvent pivoter respectivement autour d'un axe de pivotement (montants verticaux 11) parallèle au bord avant situé sur le côté éjection, et sont réunies, selon une liaison d'entraînement de pivotement réciproque, dans la zone de leur bord arrière situé côté entrée, au moyen d'une pièce d'accouplement (barres d'accouplement 21; 23) dans le sens d'une circulation d'air à jets directifs orientables, **caractérisée par** des lamelles partielles de diffusion (31;32) qui peuvent être insérées entre les lamelles directrices (2;22) en vue de l'obtention d'une circulation d'air diffuse qui diffère de la circulation d'air à jet dirigé.

2. Buse d'éjection suivant la revendication 1, **carctérisée par le fait que** les lamelles partielles de diffusion (31;32) font partie d'une grille rigide de diffusion (3) pouvant être insérée au moins partiellement entre les lamelles directrices (2;22), à partir du côté arrière de ces dernières.

3. Buse d'éjection comportant des lamelles directrices (2;22) pouvant pivoter autour d'un axe vertical de pivotement, notamment dans un boîtier (1) à lamelles pivotantes, suivant la revendication 2, **caractérisée par le fait que** la grille de diffusion (3) possède des rangées de lamelles, qui peuvent être insérées entre les lamelles directrices verticales (2;22) et possèdent des lamelles partielles de diffusion (31;32), orientées respectivement alternativement vers le haut et vers le bas.

4. Buse d'éjection suivant la revendication 3, **caractérisée par le fait que** la grille de diffusion (3) peut être déplacée à la manière d'un coulisseau (coulisseau de guidage 35), par un organe latéral de commande (bouton de commande rotatif 4) depuis une première position inactive en arrière des lamelles directrices (2;22) lorsque la buse d'éjection éjecte un jet directif, dans une position active, dans laquelle des lamelles partielles de diffusion (31;32) pénètrent entre les lamelles directrices (2;22), lors du fonctionnement avec diffusion de la buse d'éjection.

5. Buse d'éjection suivant la revendication 4, **caractérisée par** au moins un bouton de commande rotatif (4) monté rotatif sur le boîtier (1) des lamelles pivotantes et comportant une voie de guidage en spirale (41) pour un ergot d'entraînement (36) de la grille de diffusion (3) déplaçable linéairement dans une glissière (12) du boîtier (1) des lamelles pivotantes, entre les lamelles directrices (2;22).

6. Buse d'éjection suivant la revendication 5, **caractérisée par** un dispositif de centrage entre le bouton de commande rotatif (4) et les lamelles directrices pivotantes (2;22) en vue de l'obtention d'un redressement des lamelles directrices (2;22) avant le déplacement linéaire de la grille de diffusion (3) de sa position inactive dans sa position active.

7. Buse d'éjection suivant la revendication 6, **caractérisée par** un cône de centrage (43) situé sur le bouton de commande rotatif (4) et une fourche correspondante de centrage (24), qui est associée à ce bouton en vue de l'obtention d'une position droite des lamelles directrices (2;22), et raccordées selon une liaison d'entraînement à la partie d'accouplement (barres d'accouplement 21;23) des lamelles directrices (2;22).

8. Buse d'éjection suivant la revendication 6, **caractérisée par** une partie en forme d'arc de cercle (42) d'une voie de guidage, qui, jusqu'au redressement des lamelles directrices (2;22), est présente en amont de la voie de guidage en forme de spirale (41) du bouton de commande rotatif (4).

FIG 1

FIG 2

FIG 3

FIG 4

FIG 5